# DEMANDE DE BREVET EUROPEEN

(11) **EP 0 532 810 A1**
(43) Date de publication de la demande: **24.03.1993**
(21) Numéro de dépôt: 91402504.4
(22) Date de dépôt: 20.09.1991
(51) Int. Cl.: B01D 46/02

(54) **Perfectionnement aux châssis de support pour élément filtrant**

(71) Demandeur: FRANCE DEPOUSSIERAGE INDUSTRIEL, F-93370 Montfermeil (FR)
(72) Inventeur: Touarin, Claude, F-93340 Le Raincy (FR)
(74) Mandataire: Boutin, Antoine

(57) **Abrégé**

Un sac filtrant (18) est enfilé sur le châssis qui comporte une armature rigide constituée d'un cadre rectangulaire (10) s'étendant sur trois côtés de l'armature, d'une bride d'appui (16) sur la périphérie d'un passage (9) allongé ménagé dans une plaque de base (4), et d'un évent de sortie (20) pour l'air filtré. L'évent est formé d'un conduit plat ouvert, prolongeant la bride d'appui et solidarisé des côtés latéraux du cadre. Les parois du sac (18) sont écartées l'une de l'autre par un ensemble de ressorts de décolmatage (23), montés entre le côté (13) du cadre (10) opposé à la plaque de base et un organe d'accrochage situé au voisinage de l'évent de sortie. L'organe d'accrochage est constitué par des pattes (26) dont les extrémités sont percées d'un trou, lesdites pattes étant découpées dans les bords inférieurs des plaques formant l'évent (20) et rabattues en direction du milieu de l'ouverture dudit évent.

## Description

La présente invention concerne les châssis de support destinés à recevoir des sacs filtrants enfilés sur ceux-ci et constituant avec eux autant d'éléments de filtration. Un tel support a été décrit dans le brevet français 2 584 304 du même demandeur.

Dans ce brevet est décrite une installation où le caisson de filtration comporte principalement, outre un ventilateur d'aspiration et des organes de commande et de régulation de celui-ci, une plaque de base, horizontale ou verticale fermant un côté du caisson et comprenant un ensemble de passages parallèles et allongés, destinés chacun au montage d'un châssis de support pour un élément filtrant. Chaque châssis comporte une armature interne métallique, de forme générale rectangulaire, formée sur trois côtés d'un cadre extérieur constitué au moyen de tubes métalliques. Des ressorts parallèles sont fixés entre la base du cadre et une barrette transversale disposée à proximité de l'évent de sortie. Une bride d'appui s'étend perpendiculairement au plan du cadre rectangulaire pour le montage du châssis sur la plaque de base avec interposition, entre bride et plaque, d'un joint d'étanchéité. Un évent de sortie de l'air filtré formé par un conduit plat, ouvert à ses deux extrémités prolonge la bride d'appui à l'opposé des grillages de l'armature et est solidaire des côtés latéraux du cadre. Une manche, ou sac filtrant, est enfilée sur le cadre de l'armature, son extrémité ouverte, opposée au fond du sac est immobilisée sous la bride d'appui par le joint d'étanchéité, lui-même fixé à la manche.

L'armature métallique et les ressorts qu'elle comporte, sur lesquels est enfilé le sac filtrant de chaque châssis, assure, entre les deux faces de ce sac, un écartement sensiblement constant, l'étanchéité étant réalisée au montage grâce au joint fixé sur le sac et en appui sous la bride contre le bord du passage correspondant prévu dans la plaque de base.

Les châssis du genre ci-dessus, une fois mis en place à travers les passages prévus sur la plaque de base du caisson, sont immobilisés contre celle-ci par des organes de serrage de leur bride d'appui, en permettant de comprimer les joints d'étanchéité. En outre, on prévoit usuellement, à l'intérieur du caisson, au-dessus et au voisinage immédiat de l'évent de sortie d'air filtré, des conduits d'injection cyclique d'air comprimé, envoyé ainsi sous pression dans le sac filtrant de l'élément correspondant, ces conduits d'injection étant alimentés à travers les électrovannes de telle sorte que l'air injecté permette d'éviter le colmatage des sacs par les poussières accumulées sur leurs parois extérieures, en provoquant brutalement l'expansion limitée de ces sacs, autrement plaqués contre les grillages de chaque armature par l'effet de l'aspiration de l'air à dépoussiérer, aspiré à l'intérieur du caisson.

On a constaté que le montage des ressorts sur une barrette transversale soudée à proximité de l'évent de sortie n'est pas satisfaisant.

En effet, cette barrette est fixée par soudure sur les côtés du cadre et cette opération de soudure produit une oxydation et un affaiblissement de l'acier qui sous l'effet des chocs et des vibrations auxquels sont soumis les châssis notamment lors des chasses d'air de décolmatage parviennent à créer des ruptures des soudures, voire du châssis lui-même.

En second lieu l'opération de soudage échauffe la barrette métallique et déforme son profil de sorte que les ressorts ne sont pas exactement centrés par rapport à l'évent de sortie ce qui est néfaste à leur mise en résonance.

Enfin, la présence d'une barrette, même de faible épaisseur, en travers de l'évent de sortie réduit sensiblement la surface d'aspiration et par conséquent les performances du châssis.

L'invention vise à remédier à ces inconvénients. Dans ce but elle prévoit de former les points d'accrochage supérieurs des ressorts par des pattes découpées directement à la base des plaques constituant l'évent de sortie, ces pattes étant percées à leur extrémité par un trou permettant l'accrochage de la partie supérieure du ressort et ces pattes étant repliées en direction du centre de l'ouverture de l'évent de sortie.

Cette disposition permet de supprimer la barrette rapportée par soudage des châssis antérieurement connus.

Les pattes découpées dans la base des plaques formant l'évent de sortie pouvant être de dimensions très faibles, il en résulte une augmentation sensible de la surface de passage de l,évent donc, de la capacité de traitement du châssis.

En outre, les trous d'accrochage des ressorts pratiqués dans l'extrémité des pattes peuvent être parfaitement centrés par rapport à l'ouverture de l'évent.

Enfin, la formation de ces pattes peut être très aisément et économiquement obtenue par estampage et poinçonnage des plaques formant l'évent avant leur montage sur le cadre ce qui permet de diminuer le prix de fabrication du cadre sensiblement par rapport à celui des cadres antérieurs dans lesquels il fallait une opération de soudage particulière pour la fixation de la barrette d'accrochage des ressorts.

D'autres caractéristiques et avantages d'un châssis de support établi conformément à l'invention apparaîtront encore, à travers la description qui suit, d'un exemple de réalisation, donné à titre indicatif et non limitatif, en référence aux dessins annexés sur lesquels :
- La figure 1 illustre un caisson de filtration, muni d'un ensemble de châssis de support pour éléments filtrants selon l'invention, où ces éléments sont portés par une plaque de base s'étendant verticalement.
- La figure 2 est une vue en perspective, avec arrachement partiel, d'un châssis entrant dans la réalisation du caisson de la figure 1.
- La figure 3 est une vue en perspective de détails de l'ouverture de l'évent du châssis des figures 1 et 2.
- La figure 4 est une vue de dessous de l'ouverture de l'évent du châssis des figures précédentes.

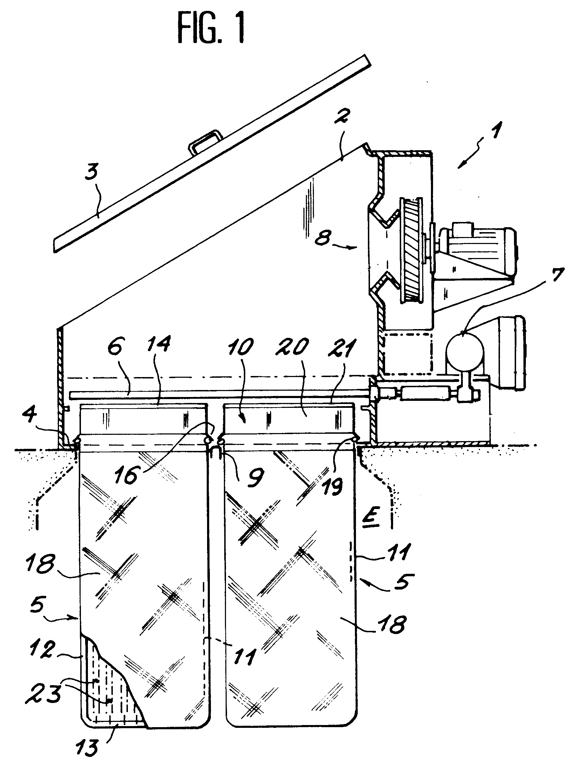

Le caisson de filtration représenté sur la figure 1 désigné dans son ensemble sous la référence 1, est destiné à assurer le dépoussiérage d'une enteinte E d'un type quelconque, du genre notamment d'un silo, d'une trémie de stotkage, d'un élévateur ou transporteur de produits pulvérulents etc..., et plus généralement encore de tout local ou enteinte où des installations fonctionnent en continu ou discontinu, en créant un environnement qui nécessite, avant son rejet à l'atmosphère, une filtration efficace des poussières ou particules en suspension dans son ambiance. Sur cette figure, le caisson représenté est principalement constitué d'un boîtier métallique 2, présentant une large ouverture d'accès pour l'entretien ou la réparation des mécanismes qu'il comporte et également pour permettre le changement des éléments filtrants associés au caisson, cette ouverture d'accès étant normalement obturée par une trappe amovible 3. Le caisson 1 comporte par ailleurs une plaque de base 4 qui peut présenter une orientation quelconque mais est de préférence horizontale ou verticale (ici horizontale), cette plaque de base 4 portant de la façon qui sera indiquée plus loin, un ensemble de châssis de support 5 d'éléments filtrants, traversant cette plaque de manière étanche de telle sorte que l'air à dêpoussiérer traverse nécessairement ces éléments avant d'être recueilli dans le caisson 1.

Pour assurer le décolmatage des éléments filtrants, le caisson 1 comporte également, selon des dispositions en elles-mêmes classiques dans ce genre d'installation, des tubes transversaux 6, montés au-dessus de ces éléments, permettant à travers des passages appropriés d'injecter à l'intérieur de ces éléments, selon des cycles à fréquence pré-déterminée, de l'air comprimé, l'alimentation des tubes 6 s'effectuant à partir d'un collecteur 7 situé à l'extérieur du caisson. Un ventilateur 8 permet par ailleurs, en régime normal, l'aspiration de l'air à dépoussiérer ayant traversé les éléments filtrants.

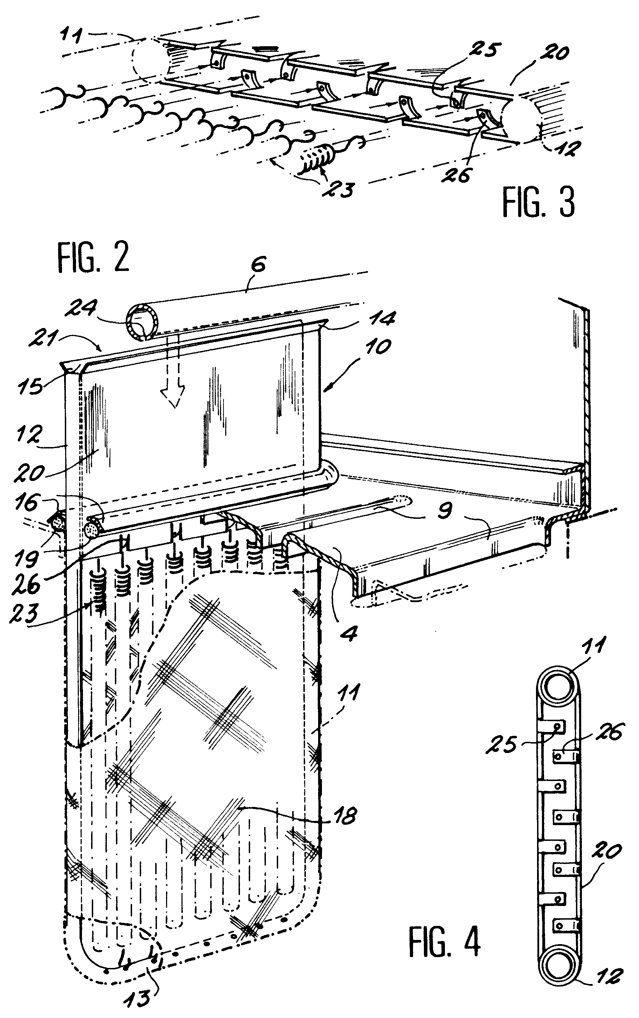

La figure 2 illustre plus particulièrement le détail de la réalisation d'un châssis de support 5 pour chacun des éléments filtrants selon l'invention, et de son montage sur la plaque de base 4 du caisson 1.

Sur cette figure, on voit que la plaque 4 présente pour recevoir chacun des châssis 5 des passages allongés parallèles entre eux et à l'intérieur desquels s'engagent verticalement ces châssis. Chacun de ceux-ci est principalement formé d'une armature extérieure constituée par un cadre tubulaire 10 convenablement cintré de manière à s'étendre sur trois côtés de l'armature, celle-ci présentant une forme générale rectangulaire. Le cadre tubulaire 10 comporte ainsi deux côtés latéraux, respectivement 11 et 12 et un côté inférieur 13, réuni aux deux premiers avec ou sans solution de continuité. En outre, le cadre tubulaire 10 est ouvert aux extrémités respectivement 14 et 15 de ses côtés 11 et 12 afin de permettre le montage à l'intérieur du cadre tubulaire 10 d'accessoires éventuels.

Le support de chaque châssis 5 sur la plaque de base 4, après engagement dans le passage 9 correspondant, est réalisé au moyen d'une bride d'appui 16 prévue vers l'extrémité supérieure du cadre 10 de ce châssis, et s'étendant parallèlement au plan de la plaque de base.

Cette bride 16 est immobilisée sur la plaque au moyen d'organes de fixation.

L'élément filtrant de chaque châssis 5 est constitué par un sac ou une manche 18, réalisé en tout matériau approprié, du genre notamment d'un feutre de verre ou de fibres minérales ou organiques, ou encore en coton ou en un matériau plastique poreux. Chaque sac 18 est étroitement enfilé sur le cadre 10 de l'armature de telle sorte qu'il recouvre les côtés latéraux 11 et 12 de celui-ci ainsi que le côté inférieur 13, chaque sac comportant, cousu ou fixé d'une autre façon à son extrémité supérieure, un joint continu 19 d'étanchéité, venant se loger sous la bride d'appui 16 en étant immobilisé entre cette dernière et la surface supérieure de la plaque de base 4, de manière à éviter que l'air à dépoussiérer situé dans l'enceinte E ne pénètre dans le caisson 1 sans avoir traversé l'un quelconque des éléments filtrants précédents. Au-dessus de la plaque de base 4, en prolongement de la bride d'appui 16, chaque châssis 5 comporte par ailleurs un évent de sortie de l'air filtré avant d'être recueilli dans le caisson 1, se présentant sous la forme d'un conduit plat 20, ouvert et dont l'extrémité supérieure 21 est légèrement évasée. Ce conduit 20 est disposé par construction en regard d'un tube 6 d'injection d'air comprimé, celui-ci présentant une fente 24 prévue à sa base pour permettre, selon un cycle prédéterminé, l'envoi d'une quantité d'air comprimé convenable dans le sac filtrant 18 correspondant, pour assurer de manière en elle-même connue, l'expansion brutale des parois de ce sac et leur décolmatage, en éliminant les poussières accumulées contre la surface extérieure de ces parois qui retombent dans l'enceinte E dans un système de récupération éventuel (non représenté) et dont le détail importe peu à l'invention.

L'écartement des parois du sac filtrant 18 de chaque châssis 5 est réalisé par des ressorts 23. Ces ressorts 23 sont fixés à leur partie inférieure dans des trous ménagés dans le côté inférieur 13 du cadre tubulaire 10. A leur partie supérieure conformément à l'invention, les ressorts 18 sont fixés dans des trous 25 ménagés à l'extrémité de languettes 26 elles-mêmes découpées dans la base des deux plaques formant l'évent de sortie 20 et recourbées vers l'intérieur de l'ouverture de l'évent. On voit que par cette disposition extrêmement simple on obtient un centrage parfait de l'accrochage supérieur des ressorts et une augmentation de la surface de sortie de l'évent, le tout dans des conditions économiques très avantageuses.

Cette disposition procure une très nette amélioration des performances du châssis. En effet par rapport à un châssis dans lequel les ressorts sont fixés à une barrette rapportée en travers de l'ouverture de l'event, une augmentation de la capacité d'air traité de 25 à 30 % est obtenue avec les pattes d'accrochage selon l'invention.

Par ailleurs le parfait centrage des ressorts favorise leur mise en résonance mécanique et en conséquence l'effet de battage qu'ils ont sur les flancs du sac lors de la chasse d'air à contre-courant pour le décolmatage.

L'invention n'est pas limitée au mode de réalisation décrit mais est applicable à tout châssis de support pour élément filtrant que celui-ci soit tubulaire ou réalisé dans des cornières et que le châssis soit démontable ou non.

## Revendications

1. Châssis de support pour élément filtrant, comportant d'une part un sac filtrant (18), enfilé sur le châssis (5) par son extrémité ouverte munie d'un joint d'étanthéité (19) et d'autre part, une armature rigide de forme rectangulaire, constituée d'un cadre (10) s'étendant sur trois côtés de l'armature, d'une bride d'appui (16) sur la périphérie d'un passage (9) allongé ménagé dans une plaque de base (4), d'un caisson (1) de filtration et d'un évent de sortie (20) pour l'air filtré aspiré dans le caisson à travers les parois du sac filtrant, cet évent étant formé d'un conduit plat ouvert, prolongeant la bride d'appui et solidarisé des côtés latéraux du cadre, le joint (19), porté par l'extrémité ouverte du sac étant monté entre la bride d'appui de l'armature et le bord du passage ménagé dans la plaque de base, les parois du sac (18) étant maintenues à un écartement sensiblement constant l'une de l'autre par un ensemble de ressorts de décolmatage (23), montés entre le côté (13) du cadre (10) opposé à la plaque de base et un organe d'accrochage situé au voisinage de l'évent de sortie caractérisé en ce que l'organe d'accrochage est constitué par des pattes (26) dont les extrémités sont percées d'un trou (25), lesdites pattes étant découpées dans les bords inférieurs des plaques formant l'évent (20) et rabattues en direction du milieu de l'ouverture dudit évent.
